# EUROPÄISCHE PATENTSCHRIFT

(11) **EP 1 564 443 B1**
(45) Veröffentlichungstag und Bekanntmachung des Hinweises auf die Patenterteilung: **09.05.2007**
(21) Anmeldenummer: 05100698.9
(22) Anmeldetag: 02.02.2005
(51) Int. Cl.: F16H 13/10

(54) **Ausrückbarer Reibradspanner**
Releasable friction wheel tensioner
Tendeur débrayable à roue à friction

(30) Priorität: 12.02.2004 DE 102004006793
(43) Veröffentlichungstag der Anmeldung: 17.08.2005
(73) Patentinhaber: ContiTech Antriebssysteme GmbH, 30165 Hannover (DE)
(72) Erfinder: Greydanus, Ymte, 30890 Barsinghausen (DE)
(74) Vertreter: Finger, Karsten

(56) Entgegenhaltungen:
- EP-A- 1 388 655
- DE-C- 373 816
- DE-C1- 19 630 221
- DE-U- 1 810 126
- FR-A- 1 055 657

## Beschreibung

Aus der DE 373816 ist einer ausrückbaren Reibradspanner mit den Merkmalen des Oberbegriffes des Anspruches 1 bekannt.

Die Erfindung betrifft einen ausrückbaren Reibradspanner mit folgenden Merkmalen:
- ein Gehäuse
- eine Reibradaufnahme, die als verstellbarer linear geführter Ausleger ausgebildet ist,
- ein an der Reibradaufnahme drehbar befestigtes Reibrad,
- der Ausleger ist durch einen drehbaren Exzenter linear in das Gehäuse hinein oder aus dem Gehäuse heraus verlagerbar, wobei der Exzenter innerhalb einer Bohrung des Auslegers angeordnet ist und mit diesem in Wirkverbindung steht,
- der Exzenter ist durch eine Verstelleinrichtung verdrehbar,
- die Verstelleinrichtung weist einen Elektromotor und eine Rückholfeder auf, wobei der Exzenter durch den Elektromotor in eine Drehrichtung, durch die Rückholfeder in die andere Drehrichtung verdrehbar ist.

Reibradspanner dienen dazu, ein Reibrad in einem Reibradgetriebe an seinen Rotationspartner, meist ein Antriebsrad zu drücken. Dabei ist das Reibrad des Reibradspanners meist durch Federkraft an das Antriebsrad gepresst. Die Federkraft kann durch Zug- oder Druckfedern erzeugt werden, aber auch durch eine Spiralfeder, die im Drehpunkt eines Auslegers ein Drehmoment ausübt. An dem Ausleger ist an dem dem Drehpunkt gegenüber liegenden Ende das Reibrad angebracht. Derartige Reibradspanner bewirken einen dauernden Eingriff des Reibrades mit dem Antriebsrad.

Ausrückbare Reibradspanner dienen dazu, den Reibschluss zwischen Reibrad und Antriebsrad reversibel zu unterbrechen, um zum Beispiel Nebenaggregate eines Kraftfahr zeugmotors, wie Wasserpumpe, Servolenkungspumpe etc. bei Nichtgebrauch abschalten zu können, um Energie zu sparen.

Das An- bzw. Abkoppeln des Reibrades vom Antriebsrad muss einerseits schnell ablaufen, damit unnötiger Verschleiß des Reibrades vermieden wird, andererseits muss die Anpressung des Reibrades an das Antriebsrad ausreichen, ein gefordertes Nenndrehmoment zu übertragen und einen gleichmäßigen, drehschwingungsarmen Lauf des Getriebes zu ermöglichen.

Ein interner, bisher nicht veröffentlichter Lösungsansatz weist eine als verstellbarer, geführter Ausleger ausgebildete Reibradaufnahme auf, die das drehbar befestigte Reibrad durch lineare Verlagerung des Auslegers aus einem Gehäuse heraus oder in das Gehäuse hinein mit einem Antriebsrad in Eingriff bringt oder vom Antriebsrad abkoppelt. Der Ausleger wird dadurch verlagert, dass er über den sich drehenden Exzenter der Verstelleinrichtung aus dem Gehäuse herausgeschoben oder in das Gehäuse hineingezogen wird. Die Verdrehung des Exzenters geschieht durch den Elektromotor. Die Rückstellfeder sorgt bei Abschaltung des Stromes am Elektromotor für die Rückdrehung.

Diese Anordnung setzt einen präzise arbeitenden, sehr langsam drehenden Elektromotor mit hohem Drehmoment voraus. Außerdem muß der Motor für die Rückdrehung des Exzenters bei Ausschalten des Stromes praktisch bremsmomentfrei sein, da die Rückholfeder sonst zu stark ausgelegt werden muß oder eine zuverlässige Abkoppelung des Reibrades vom Antriebsrad nicht gewährleistet ist. Die Bremsmomentfreiheit ist jedoch auch bei sehr aufwendigen Elektromotoren nicht vollständig gewährleistet. Außerdem verursachen langsamdrehende Elektromotore mit hohem Drehmoment sehr hohe Kosten.

Der Erfindung liegt daher die Aufgabe zugrunde, einen Exzenterantrieb für einen verstellbaren Reibradspanner zu schaffen, der im stromlosen Zustand die Rückdrehung des Exzenters nicht behindert und mit einem einfachen, kostengünstigen Elektromotor betrieben werden kann.

Diese Aufgabe wird dadurch gelöst, dass die Verstelleinrichtung eine Wirbelstromkupplung aufweist, wobei der Elektromotor der Verstelleinrichtung über die Wirbelstromkupplung und das Getriebe mit dem Exzenter in Wirkverbindung steht.

Diese erfmdungsgemäße Anordnung hat den Vorteil, dass der Elektromotor über die Wirbelstromkupplung auf den Exzenter einwirkt. Wird der Strom am Elektromotor und der Wirbelstromkupplung abgeschaltet, ist eine vollständige mechanische Entkopplung von Elektromotor und Exzenter erreichbar.

In einer weiteren Ausbildung der Erfindung ist zwischen Wirbelstromkupplung und Exzenter der Verstelleinrichtung ein Zahnradgetriebe angeordnet.

Durch die Zwischenschaltung des Getriebes kann bei genügend großer Untersetzung auch ein kostengünstiger schnelllaufender Elektromotor mit geringem Drehmoment eingesetzt werden. Dabei sind auch während des Verstellens, also während der Drehung des Motors, die Abweichungen von einem gleichmäßigen Lauf des Motors durch die Verwendung des Getriebes und der Wirbelstromkupplung von geringem Einfluss auf die Funktion des Reibradspanners. Die Verwendung eines teuren, langsamlaufenden Elektromotors mit hohem Drehmoment, der den Exzenter direkt antreibt, ist daher nicht erforderlich.

Anhand der Zeichnung wird nachstehend ein Ausführungsbeispiel der Erfindung näher erläutert. Es zeigt
- Fig. 1: einen Reibradspanner in dreidimensionaler Darstellung als aufgeschnittenes Modell,
- Fig. 2: den Reibradspanner aus Fig. 1 als Querschnitt
- Fig. 3: das Gehäuse des Reibradspanners mit einem Elektromotor ohne Kupplung, Getriebe und Verstelleinheit,
- Fig. 4: das Gehäuse aus Fig. 3 mit montierter Kupplung, Rückholfeder und Verstelleinheit und
- Fig. 5: das komplett montierte Gehäuse des Reibradspanners.

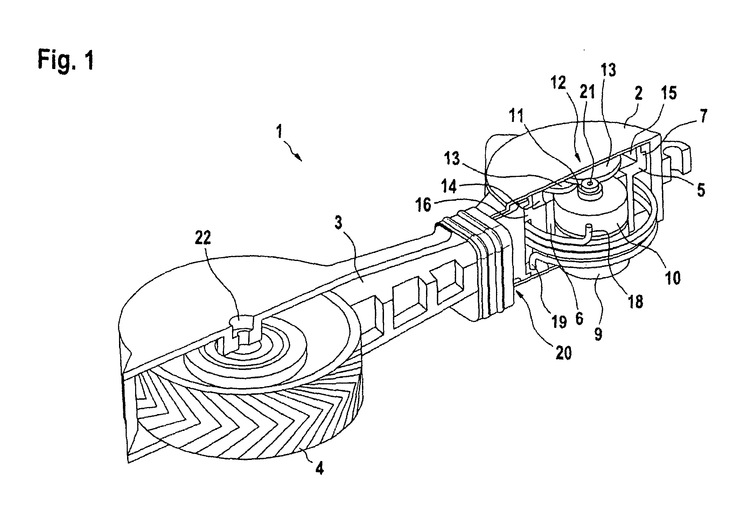

Fig. 1 zeigt einen erfindungsgemäßen Reibradspanner 1 in einer dreidimensionalen Darstellung mit einem Gehäuse 2 und einem Ausleger 3, an dessen dem Gehäuse 2 abgewandten Seite ein Reibrad 4 drehbar gelagert ist. Das Gehäuse 2 nimmt einen Exzenter 5 auf, der auf einen rohrförmigen, aus der Mitte des Gehäuses 2 aufragenden Stutzen 6 des Gehäuses 2 aufgeschoben ist und mit seinem unteren Ende 7 in eine Bohrung oder ein Auge 8 des Auslegers 3 greift. Innerhalb des rohrförmigen Gehäusestutzens 6 ist ein Elektromotor 9 angeordnet. Oberhalb des Elektromotors 9 ist eine Wirbelstromkupplung 10 angebracht, die an ihrer Oberseite ein Ritzel 11 aufweist. Das Ritzel 11 steht über ein Zahnradgetriebe 12 mit dem Exzenter 5 in Wirkverbindung, indem eines der Zahnräder 13 des Zahnradgetriebes 12 in eine Innenverzahnung 14 des Exzenters 5 greift, die an der Innenseite 15 des ringförmigen, im Durchmesser gegenüber dem Exzenter 5 erweiterten oberen Teil 16 des Exzenters 5 angebracht ist. Eine spiralförmige Rückholfeder 17 liegt außen um den Exzenter 5 herum und ist mit einem Ende 18 an der Wirbelstromkupplung 9, mit dem anderen Ende 19 an dem Ausleger 3 befestigt. Der Ausleger ist in einer Öffnung 20 des Gehäuses 2 linear verschieblich geführt.

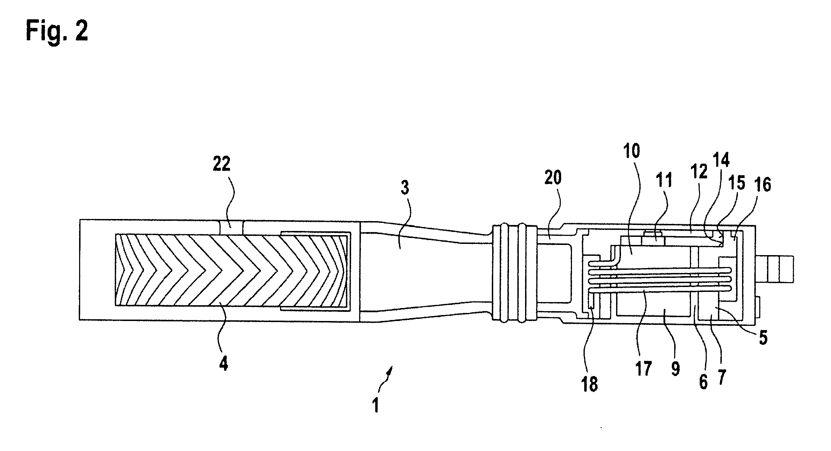

In Fig. 2 sind die genannten Einzelteile des Reibradspanners 1 noch einmal in einem Querschnitt dargestellt.

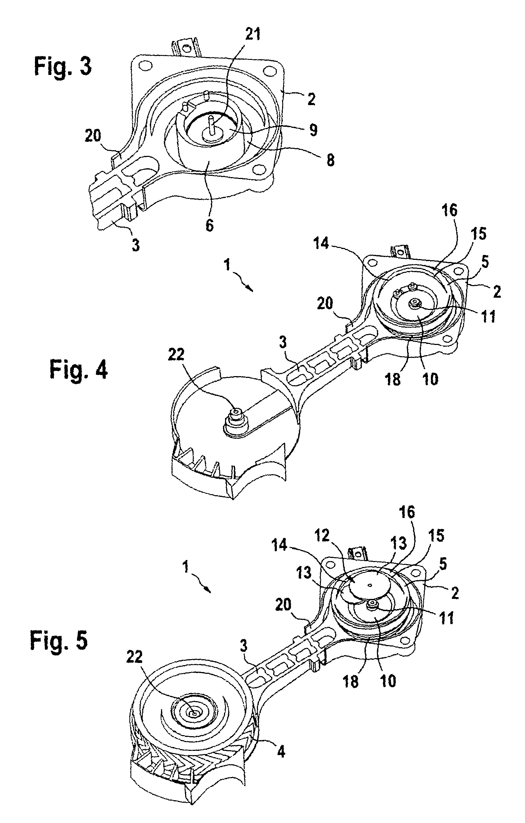

Fig. 3 zeigt das geöffnete Gehäuse 2 mit im Inneren des Gehäusestutzens 6 drehfest angebrachten Elektromotor 9. Der Elektromotor 9 weist eine lange, nach oben herausragende Welle 21 auf. An dem dem Gehäuse 2 abgewanden Ende des Auslegers ist ein Lagerzapfen 22 zur Aufnahme des Reibrades 4 angeordnet.

Fig. 4 zeigt das geöffnete Gehäuse 2 mit montierter Rückholfeder 17 und aufgeschobenem Exzenter 5. Die Wirbelstromkupplung 10 ist oberhalb des Elektromotors 9 innerhalb des Gehäusestutzens 6 montiert und drehfest mit der langen Welle 21 des Elektromotors 9 verbunden.

In Fig 5 ist das Reibrad 4 auf dem Lagerzapfen 22 drehbar angebracht. Zwischen dem Ritzel 11 der Wirbelstromkupplung 10 und der Innenverzahnung 14 des Exzenters 5 ist das Zahnradgetriebe 12 mit einer Untersetzung von Ü = 1:100 angeordnet.

Dreht sich die Welle 21 des Elektromotors 9 in eine erste Drehrichtung, wird diese Rotation über die Wirbelstromkupplung 10 auf das Ritzel 11 übertragen. Eventuelle Drehmomentschwankungen werden durch die Wirbelstromkupplung 10 abgemildert. Die Wirbelstromkupplung 10 ist nur während der Rotation der Welle 21 wirksam. Das Ritzel 11 überträgt die Rotation des Wirbelstromkupplung 10 über das Zahnradgetriebe 12 und die Innenverzahnung 14 des Exzenters 5 auf den Exzenter 5. Dabei dreht sich der Exzenter 5 im Auge 8 des Auslegers 3. Der Ausleger 3 wird dadurch in der Öffnung 20 des Gehäuses 2 linear aus dem Gehäuse 2 heraus verlagert.

Wird der Strom am Elektromotor 9 und der Wirbelstromkupplung 10 abgeschaltet, wird über die Rückholfeder 17 der Exzenter 4 zurückgedreht und damit der Ausleger 3 in das Gehäuse 2 linear zurückgezogen. Damit wird das Reibrad 3 vom hier nicht gezeigten Antriebsrad abgekoppelt.

### Bezugszeichenliste

- 1: Reibradspanner
- 2: Gehäuse
- 3: Ausleger
- 4: Reibrad
- 5: Exzenter
- 6: Gehäusestutzen
- 7: unteres Ende des Exzenters 5
- 8: Auge des Auslegers 3
- 9: Elektromotor
- 10: Wirbelstromkupplung
- 11: Ritzel
- 12: Zahnradgetriebe
- 13: Zahnräder
- 14: Innenverzahnung des Exzenters 5
- 15: Innenseite des Exzenters 5
- 16: oberes Teil des Exzenters
- 17: Rückholfeder
- 18: kupplungsseitiges Ende der Rückstellfeder 18
- 19: auslegerseitiges Ende der Rückstellfeder 18
- 20: Welle des Elektromotors 8
- 21: Öffnung des Gehäuses 2
- 22: Lagerzapfen

## Patentansprüche

1. Ausrückbarer Reibradspanner (1) mit folgenden Merkmalen:
- ein Gehäuse (2)
- ein an einer Reibradaufnahme (3) drehbar befestigtes Reibrad (4),
**gekennzeichnet durch** :
- die Reibradaufnahme ist als verstellbare linear geführter Auslager (3) ausgebildet,
- der Ausleger (3) ist **durch** einen drehbaren Exzenter (5) linear in das Gehäuse (2) hinein oder aus dem Gehäuse (2) heraus verlagerbar, wobei der Exzenter(5) innerhalb einer Bohrung (8) des Auslegers (2) angeordnet ist und mit diesem in Wirkverbindung steht,
- der Exzenter (5) ist **durch** eine Verstelleinrichtung verdrehbar,
- die Verstelleinrichtung weist einen Elektromotor (9) und eine Rückholfeder (17) auf, wobei der Exzenter **durch** den Elektromotor in eine Drehrichtung, **durch** die Rückholfeder in die andere Drehrichtung verdrehbar ist,
die Verstelleinrichtung weist eine Wirbelstromkupplung (10) auf, wobei der Elektromotor (9) der Verstelleinrichtung über die Wirbelstromkupplung (10) mit dem Exzenter (5) in Wirkverbindung steht.

2. Ausrückbarer Reibradspanner (1) nach Anspruch 1, **dadurch gekennzeichnet, dass** zwischen Wirbelstromkupplung (10) und Exzenter (5) der Verstelleinrichtung ein Zahnradgetriebe (12) angeordnet ist.

## Claims

1. Releasable friction wheel tensioner (1) with the following features:
- a housing (2)
- a friction wheel (4) rotatably fastened to a friction wheel receiver (3), **characterized by**:
- the friction wheel receiver is configured as an adjustable arm (3) guided in a linear manner,
- the arm (3) may be displaced by a rotatable eccentric (5) in a linear manner into the housing (2) or out of the housing (2), the eccentric (5) being arranged inside a bore (8) of the arm (2) and cooperating therewith,
- the eccentric (5) may be rotated by an adjustment device,
- the adjustment device comprises an electric motor (9) and a return spring (17), the eccentric being able to be rotated by the electric motor in one rotational direction and by the return spring in the other rotational direction,
- the adjustment device comprises an eddy current clutch (10), the electric motor (9) of the adjustment device cooperating with the eccentric (5) via the eddy current clutch (10).

2. Releasable friction wheel tensioner (1) according to Claim 1, **characterized in that** a toothed gearing (12) is arranged between the eddy current clutch (10) and the eccentric (5) of the adjustment device.

## Revendications

1. Tendeur débrayable (1) pour roue à friction, qui présente les caractéristiques suivantes :
- un boîtier (2),
- une roue de friction (4) fixée à rotation sur un logement (3) de roue de friction,
**caractérisé en ce que** :
- le logement de la roue de friction est configuré comme bras ajustable (3) guidé en ligne droite,
- le bras (3) peut être rentré ou extrait linéairement par rapport au boîtier (2) à l'aide d'un excentrique rotatif (5), l'excentrique (5) étant disposé à l'intérieur d'un alésage (8) ménagé dans le bras (2) et coopérant avec ce dernier,
- l'excentrique (5) peut être tourné au moyen d'un dispositif d'ajustement,
- le dispositif d'ajustement présente un moteur électrique (9) et un ressort de rappel (17), l'excentrique étant tourné dans un sens de rotation par le moteur électrique et dans l'autre sens de rotation par le ressort de rappel,
- le dispositif d'ajustement présente un accouplement (10) à courants de Foucault, le moteur électrique (9) du dispositif d'ajustement coopérant avec l'excentrique (5) par l'intermédiaire de l'accouplement (10) à courants de Foucault.

2. Tendeur débrayable (1) pour roue de friction selon la revendication 1, **caractérisé en ce qu'**une transmission (12) à roues dentées est disposée entre l'accouplement (10) à courants de Foucault et l'excentrique (5) du dispositif d'ajustement.
